# EUROPEAN PATENT SPECIFICATION

(11) **EP 2 966 190 B1**
(45) Date of publication and mention of the grant of the patent: **26.09.2018**
(21) Application number: 13876879.1
(22) Date of filing: 07.03.2013
(51) Int. Cl.: C23C 10/28, C23C 10/04, C25D 3/66, C25D 21/11, F01D 5/28, F01D 25/00, F02C 7/00, C21D 6/00, C25D 5/02, C25D 5/34, C25D 5/50, C25D 7/00, C25D 17/02, C22F 1/10, C22F 1/18, B32B 15/01

(54) **METHOD FOR FORMING ALUMINIDE COATING FILM ON BASE**
VERFAHREN ZUR HERSTELLUNG EINES ALUMINIDBESCHICHTUNGSFILMS AUF EINER BASIS
PROCÉDÉ POUR LA FORMATION DE FILM DE REVÊTEMENT D'ALUMINURE SUR UNE BASE

(43) Date of publication of application: 13.01.2016
(73) Proprietor: Hitachi, Ltd., Tokyo 100-8280 (JP)
(72) Inventor: NAKANO, Hiroshi, Chiyoda-ku Tokyo 100-8280 (JP); NEGISHI, Yoshinori, Chiyoda-ku Tokyo 100-8280 (JP); AKAHOSHI, Haruo, Chiyoda-ku Tokyo 100-8280 (JP); IZUMI, Takeshi, Chiyoda-ku Tokyo 100-8280 (JP); KOJIMA, Yoshitaka, Chiyoda-ku Tokyo 100-8280 (JP); ARIKAWA, Hideyuki, Chiyoda-ku Tokyo 100-8280 (JP)
(74) Representative: Beetz & Partner mbB
(86) International application number: PCT/JP2013/056276
(87) International publication number: WO 2014/136235

(56) References cited:
- EP-A1- 2 330 233
- EP-A1- 2 465 977
- EP-A1- 2 481 836
- WO-A1-2006/077670
- DE-B3-102011 055 911
- JP-A- H0 328 391
- JP-A- H0 328 392
- JP-A- S6 277 500
- JP-A- H03 134 193
- JP-A- S55 115 994
- JP-A- 2008 138 224
- JP-A- 2013 060 609

## Description

### TECHNICAL FIELD OF THE INVENTION

The present invention relates to a technique of forming an aluminide coating on a base material (substrate), and in particular to a method for forming an aluminide coating on a selective area of a high temperature member comprising a heat resistant superalloy. A method for repairing a heat resistant superalloy by forming an aluminide coating on a surface of the heat resistant superalloy substrate as described in the preamble portion of patent claim 1 has been known from EP 2 465 977 A1.

### DESCRIPTION OF BACKGROUND ART

In high temperature members (for example, a turbine blade and a combustor of a gas turbine, and the like) exposed to high temperature combustion gas, heat resistant superalloys (for example, a nickel based superalloy or a cobalt based superalloy) having excellent high temperature strength are used as a substrate thereof. Such a high temperature member is usually provided with a thermal barrier coating (TBC) on the surface thereof in order to enhance oxidation resistance and corrosion resistance at a high temperature. Typically, an aluminide coating or a heat resistant alloy layer (for example, MCrAlY alloy layer) is formed directly on the heat resistant superalloy substrate, and a ceramic thermal barrier layer is formed thereon.

Even in a turbine blade provided with a thermal barrier coating, when it is used for some period of time in a high temperature gas environment of a gas turbine, oxidation erosion due to attack by the high temperature gas and corrosion due to chemical reactions with contaminants in the combustion product are brought about. As a result, the coating layer is gradually degraded, and causes damages such as wear and fracture.

Thus damaged thermal barrier coating layer requires to be repaired, but simple reconstruction of only the worn-out part of the coating layer causes an insufficient adhesion. Accordingly, the coating layer is usually reconstructed after removing the coating layer including the aluminide coating. In most cases, the damage to be repaired is generated only in a part of the coating layer, and therefore, for repairing a part of the coating layer, the removal and reconstruction of all the coating layers including the aluminide coating bring a large loss of time and cost. Thus, there is a demand for a technique for providing an aluminide coating in a selective area.

As a method for forming an aluminide coating in a selective area, for example, the following techniques have been reported.

JP 2001-115250 A discloses a method for forming a metal-containing layer on a substrate, comprising the following steps: (a) depositing a slurry of the metal on the substrate; and (b) heating the metal slurry under temperature and time conditions sufficient to remove substantially all of volatile material from the slurry, and to form a layer which comprises the metal (so-called slurry method). According to JP 2001-115250 A, it is argued that this repair process is greatly useful for applying durable "patch coats" on various substrates, and that a protective coating of a turbine blade can easily be repaired locally.

JP 2008-138224 A discloses a method for applying a diffusion aluminide coating to a selective region on the surface of a heat-resistant alloy substrate to form an aluminum diffusion penetration layer including: (a) a step of forming a metal aluminum film onto a selective region of the heat-resistant alloy substrate to be treated by using a cold spray method; and (b) a step of applying a heat treatment to the heat-resistant alloy substrate on the selective region of which the metal aluminum film is formed and diffusing and penetrating aluminum in the metal aluminum film into the heat-resistant alloy substrate. According to JP 2008-138224 A, it is argued that a metal aluminum film containing little oxide inclusions can be formed by using a cold spray method, and that a diffusion aluminide coating can be provided easily on a selective region because masking a portion other than the selective region is not required.

JP 2004-035911 A discloses a method for producing a high temperature oxidation resistant and heat resistant alloy member, comprising the following steps of: applying a rhenium-containing alloy film on the surface of a heat resistant alloy substrate by an electroplating from an aluminum fused salt bath; subsequently applying an aluminum-containing alloy film on the surface of the rhenium-containing alloy coating by an electroplating from another aluminum fused salt bath; and then conducting a heat treatment at a high temperature to the applied heat resistant alloy substrate with the films thereon, thereby obtaining an alloy member having a coating with a multi-layered structure. According to JP 2004-035911 A, it is argued that, by using a heat resistant alloy member in a desired shape as a cathode and by applying an electroplating from a predetermined aluminum fused salt bath, a heat resistant alloy member with a coating having both heat resistance and high temperature oxidation resistance can be produced.

EP 2 465 977 A1 discloses a method for repairing a heat resistant superalloy member, by forming an aluminide coating on a surface of the heat resistant superalloy substrate, comprising the steps of: exposing a base metal of the heat resistant alloy substrate in a selective area where the aluminide coating is to be formed; wherein an area except for the selective area of the heat resistant superalloy substrate has a ceramic thermal barrier coating layer formed thereon, forming a film of metallic aluminum or an aluminum based alloy film on the exposed base metal, by a non-aqueous electroplating; and conducting a heat treatment to the heat resistant alloy substrate on which the film is formed, in order to make a diffusion reaction between an aluminum component in the film and the base metal, thereby forming the aluminide coating, wherein there is used, as a plating liquid, a non-aqueous plating liquid containing a halide of the metal to be plated (a metal halide), where the metal halide comprises an aluminum halide and optionally also halides of metals other than aluminum which have a negative standard electrode potential, and an organic compound which forms an ion pair with the metal halide, wherein the non-aqueous electroplating is carried out by immersing topically the selective area into the non-aqueous plating liquid.

EP 2 330 233 discloses a method for forming an aluminide coating on a surface of a heat resistant superalloy substrate, comprising the steps of: exposing a base metal of the heat resistant alloy substrate in a selective area where the aluminide coating is to be formed; forming a metal aluminum film or an aluminum based alloy film on the exposed base metal, by a non-aqueous electroplating; and conducting a heat treatment to the heat resistant alloy substrate on which the film is formed, in order to make a diffusion reaction between an aluminum component in the film and the base metal, and form the aluminide coating, wherein there is used, as a plating liquid, a non-aqueous plating liquid containing a halide of the metal to be plated and an organic compound which forms an ion pair with the metal halide, and wherein the non-aqueous electroplating is carried out by immersing topically the selective area into the non-aqueous plating liquid through the use of predetermined means for shielding the non-aqueous plating liquid from the atmosphere.

EP 2 481 836 A1 also reveals such a method.

DE 10 2011 055 911 B3 describes a method for forming an aluminum coating on a surface of a metallic substrate, comprising the steps of: exposing a base metal in a selective area where the aluminide coating is to be formed; forming a metal aluminum film or an aluminum based alloy film on the exposed base metal, by a non-aqueous electroplating; wherein there is used, as a plating liquid, a non-aqueous plating liquid containing a halide of the metal to be plated and an organic compound which forms an ion pair with the metal halide, and wherein the non-aqueous electroplating is carried out by immersing topically the selective area into the non-aqueous plating liquid, wherein the top surface of the non-aqueous plating liquid is liquid-encapsulated with a hydrophobic liquid, the hydrophobic liquid being a liquid which phase-separates from the non-aqueous plating liquid and has a smaller specific gravity than the non-aqueous plating liquid. Hence this document describes a method being very similar to the method described in EP 2 330 233 A1.

### SUMMARY OF THE INVENTION

### PROBLEMS TO BE SOLVED BY THE INVENTION

A method for forming an aluminide coating by a slurry method as described in JP 2001-115250 A requires formulation, application, drying, and heat treatment, of slurry, and i.e. so many steps are required. Therefore, the method of JP 2001-115250 A would have a problem such that labor of the repairing (i.e. cost) increases with increasing the number of portions to be repaired. In addition, a part of components, such as liquid carrier, constituting the slurry may produce a decomposition by-product as an impurity residue through the heat treatment, thereby leaving undesired contamination.

A method for forming an aluminide coating by a cold spray method as described in JP 2008-138224 A has an advantage, in that since a metal aluminum film is formed directly on a region where physical collision of metal aluminum particles occurs, no drying step is required and a uniform film can be formed on a plain surface. However, in a cold spray method, a positional relationship between a surface to be coated and a nozzle of the spray is very important. For example, the method is weak in formation of film on a surface having a greatly uneven shape as such to make a shade with respect to the spray. Furthermore, the method involves a disadvantage in that since the film is formed by collision of particles, particle growth is difficult to occur in principle and voids are prone to remain among the particles.

An electroplating method using an aluminum fused salt bath as described in JP 2004-035911 A seems to be a favorable method for forming a uniform film on the entire surface of an object to be plated (for example, a high temperature member) . However, in this plating method, a fused salt bath of a temperature of 150°C or higher is used, and corrosive gas is prone to be generated with the progress of the plating. The method thus involves a disadvantage of an immense cost which is required for ensuring safety of working environment. Also, in the cases of a partial repair and the like, another step is required in order to prevent adverse effect of corrosive gas on an intact part of the object to be plated.

As an electroplating method of aluminum, an electroplating using an ionic liquid bath which is in a liquid state around a room temperature (non-aqueous electroplating method) has been studied. For example, JP Hei 5(1993)-51785 A discloses an aluminum electroplating bath which is obtained by mix-melting an aluminum halide (A), and at least one compound (B) selected from the group consisting of a monoalkyl pyridinium halide, a dialkyl pyridinium halide, a 1-alkyl imidazolium halide, and a 1,3-dialkyl imidazolium halide, in a molar ratio of "A:B = 1:1 to 3:1" to prepare a plating bath, and by further adding polystyrene or polymethylstyrene into the plating bath in an amount of 0.1 to 50 g/L. According to Patent Literature 4, it is argued that a dense aluminum film having a plain and glossy surface can be formed at an ordinary or lower temperature with a good workability, without a hazard of explosion or ignition.

Nevertheless, a non-aqueous electroplating liquid has a problem in that, since it is generally low in chemical stability, the plating liquid is prone to be oxidized or decompose when exposed to moisture and oxygen in the atmosphere, resulting in decrease of a current efficiency or deterioration of a finishing property of the plating film. Particularly in a plating liquid prepared by using aluminum chloride, aluminum chloride itself makes a chemical reaction with water (for example, moisture in the atmosphere) and generates hydrogen chloride. Accordingly, from the viewpoints not only of stability of the electroplating but also of safety of the work, there are a difficulty in handling in that it is substantially impractical to expose the plating liquid to the atmosphere.

Although it is argued that the plating bath described in JP Hei 5(1993)-51785 A is safe even when the plating bath is exposed to oxygen and moisture, it is said that the plating bath is desirable to be used in a dry non-oxygen atmosphere (in dry nitrogen or argon) from the viewpoint of maintaining stability of the plating bath and the viewpoint of plating properties. That is, it can be said that the traditional trouble regarding the handling still remains in that the plating liquid is desired not to be exposed to the atmosphere. For this reason, it is considered that, when the non-aqueous electroplating described in JP Hei 5(1993)-51785 A is applied to a partial repair of a high temperature member (for example, a turbine blade), the workability is very bad from the viewpoint of the size and weight of the high temperature member.

Accordingly, it is an objective of the present invention to solve the aforementioned problems and to provide a method for forming an aluminide coating, in which a metal aluminum film or an aluminum based alloy film can be electroplated, in a safe, high efficient and sound manner, topically to a selective area of a heat resistant superalloy substrate for use in a high temperature member or the like. Consequently, the objective is to provide a method preventing moisture and oxygen of the atmosphere from penetrating the non-aqueous plating liquid.

According to the present invention these objects are accomplished with a method for repairing a heat resistant superalloy member comprising the features of patent claim 1.

Dependent claims are directed on features of preferred embodiments of the invention.

### ADVANTAGES OF THE INVENTION

According to the present invention, it is possible to provide a method for forming an aluminide coating, in that a metal aluminum film or an aluminum based alloy film can be electroplated, in a safe, high efficient and sound manner, topically to a selective area of a heat resistant superalloy substrate for use in a high temperature member and the like. Consequently, there can be provided a method for forming an aluminide coating having an easier handling and a better workability than that in the related art. The method for forming an aluminide coating of the invention is suitable for repairing a heat resistant member. In addition, by using the method for forming an aluminide coating of the invention, there can be provided a heat resistant member which is low in production cost and high in reliability.

### BRIEF DESCRIPTION OF THE DRAWINGS

Fig. 1 is a schematic drawing showing an example of a non-aqueous electroplating method used in the present invention;
Fig. 2 is a schematic drawing showing a perspective view of an example of a heat resistant member (a turbine blade) according to the present invention;
Figs. 3(a) to 3(c) are schematic drawings showing cross sectional views from the arrow A-A direction in Fig. 2, and show exemplary steps in a formation of a thermal barrier coating on a superalloy substrate;
Fig. 4 shows an example of an SEM observation image of a vertical cross section of an aluminide coating;
Fig. 5 shows an example of results of a composition analysis of an aluminide coating along a depth direction with an EDX;
Figs. 6(a) to 6(e) are schematic drawings showing cross sectional views of exemplary steps in a partial repair of a thermal barrier coating layer formed on a superalloy substrate; and
Figs. 7(a) to 7(d) are schematic drawings showing cross sectional views of other exemplary steps in a partial repair of a thermal barrier coating layer formed on a superalloy substrate.

### DETAILED DESCRIPTION OF THE PREFERRED EMBODIMENTS

The most significant feature of the present invention lies in a method of non-aqueous electroplating for forming a metal aluminum film or an aluminum based alloy film. Preferred embodiments of the invention will be described below with reference to the accompanying drawings and the like. However, the invention is not to be limited to the specific embodiments described below, but various combinations or modifications thereof are possible.

### Non-aqueous Electroplating Method

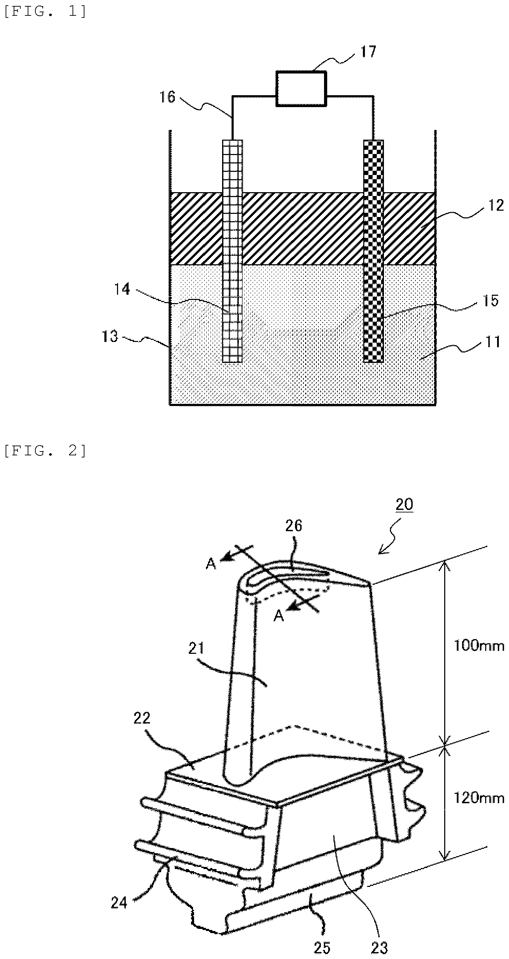

Figure 1 is a schematic view drawing showing an example of a non-aqueous electroplating method for use in the present invention. As shown in Fig. 1, the non-aqueous electroplating of the invention is carried out, by using an non-aqueous plating liquid 11 and a hydrophobic liquid 12 which phase-separates from the non-aqueous plating liquid 11 and has a smaller specific gravity than the non-aqueous plating liquid 11, in a state that the top surface of the non-aqueous plating liquid 11 is liquid-encapsulated with the hydrophobic liquid 12. The non-aqueous plating liquid 11 is liquid-encapsulated by the hydrophobic liquid 12, and insulated from the atmosphere. This prevents moisture in the atmosphere from penetrating into the non-aqueous plating liquid 11, and also allows for suppression of oxygen penetration. Consequently, it enables to conduct a non-aqueous plating by using a plating tank 13 whose top surface is opened to the atmosphere (that is, under an atmospheric condition).

A heat resistant superalloy substrate which is an object to be plated 14 (a cathode electrode) and a counter electrode 15 (an anode electrode) are partially immersed and disposed in the non-aqueous plating liquid 11, and are each connected to a power source 17 via a lead wire 16. When applying electric current, a plating film is deposited selectively on the part of the plating object 14 which is immersed into the non-aqueous plating liquid 11. In other words, by using this plating method, it becomes possible to easily form a plating film on a partial and selective area of a heat resistant superalloy substrate without masking with an insulating tape or the like.

As the counter electrode 15, an undissolvable electrode (for example, platinum, titanium-platinum, etc.) may be used, alternatively a dissolvable electrode made of a metal to be plated (for example, aluminum) may be used. When a dissolvable electrode is used, a metal ion which is consumed in the plating can be automatically replenished to maintain the metal ion concentration in the plating liquid within a certain range. In particular in the case of continuous plating, since metal ions are automatically replenished according to the quantity of the applied current, a dissolvable electrode may be preferably used.

When the heat resistant superalloy substrate is going to be disposed in the non-aqueous plating liquid 11, the heat resistant superalloy substrate is passed through a layer of the hydrophobic liquid 12 and is immersed into the non-aqueous plating liquid 11. This brings an additional effect as follows: Even when an aqueous plating pretreatment liquid is used for exposing the base metal of the heat resistant superalloy substrate or pure water for washing away the plating pretreatment liquid remains on the surface of the heat resistant superalloy substrate, such water or the like is eliminated with the hydrophobic liquid 12 when the substrate passes through the layer of the hydrophobic liquid 12.

The non-aqueous plating liquid 11 contains a halide of the metal to be plated (metal halide) and an organic compound which forms an ion pair with the metal halide. As the metal halide for use in the present invention, chloride and bromide of aluminum are suitably used. In other embodiments, not being embodiments of the present invention, halides of metals other than aluminum (metals having a negative standard electrode potential, for example, tin, nickel, cobalt, chromium, zinc, etc.) may be used. As the metal halides, halides of two or more different metal species can be used in mixture. The metal halide to be used is preferably in an anhydride salt form. In the embodiments of the present invention, the non-aqueous electroplating of the present invention is limited to an electroplating with aluminum and an aluminum based alloy. In other embodiments, not being embodiments of the present invention, the non-aqueous electroplating may be used for an electroplating with a noble metal (a metal having a positive standard electrode potential, for example, copper, gold, etc.).

As an organic compound for use in the present invention (an organic compound which forms an ion pair with the metal halide mentioned above), at least one of dialkylimidazolium salts, pyridinium salts, aliphatic phosphonium salts, and quarternary ammonium salts may be suitably used. More specifically, examples of the dialkylimidazolium salts include: 1-ethyl-3-methylimidazolium chloride, 1-ethyl-3-methylimidazolium bromide, 1-ethyl-3-methylimidazolium iodide, 1-butyl-3-methylimidazolium chloride, 1-butyl-3-methylimidazolium bromide, and 1-butyl-3-methylimidazolium iodide. Examples of the pyridinium salts include: methylpyridinium chloride, methylpyridinium bromide, methylpyridinium iodide, ethylpyridinium chloride, ethylpyridinium bromide, ethylpyridinium iodide, butylpyridinium chloride, butylpyridinium bromide, and butylpyridinium iodide. Examples of aliphatic phosphonium salts include: ethyltributylphosphonium chloride, ethyltributylphosphonium bromide, ethyltributylphosphonium iodide, methyltributylphosphonium chloride, methyltributylphosphonium bromide, and methyltributylphosphonium iodide. Examples of quarternary ammonium salts include: tetraethylammonium bromide, trimethylethylammonium chloride, and tetrabutylammonium chloride.

The organic compound and the metal halide mentioned above are preferably mix-melted in a molar ratio satisfying "1:1 ≤ (organic compound):(metal halide) ≤ 1:3", and more preferably in a molar ratio satisfying "1:1.5 ≤ (organic compound) : (metal halide) ≤ 1: 3". When the molar concentration of the metal halide is smaller than the molar concentration of the organic compound, the deposition rate of the plating significantly decreases, and the deposition uniformity of the plating is deteriorated. On the other hand, when the molar concentration of the metal halide exceeds 3 times the molar concentration of the organic compound, the viscosity of the non-aqueous plating liquid 11 increases, and the current efficiency of the plating is deteriorated.

When halides of two or more different metal species are used in mixture as the metal halide (that is, in the case of an alloy plating), the organic compound and the metal halides are preferably mix-melted in a molar ratio satisfying "1:1 ≤ (organic compound) : (metal halides) ≤ 1:3". Strictly speaking, the ratio of the metal species to be mixed depends on the deposition efficiencies of the respective metal species (deposition ratio), but it substantially matches the composition ratio of the alloy to be applied by the plating.

The hydrophobic liquid 12 for use in the present invention is preferably phase-separated from the non-aqueous plating liquid 11 (in other words, has a low compatibility with the non-aqueous plating liquid 11), and also preferably has a lower specific gravity than the non-aqueous plating liquid 11. In particular, it is preferred that the specific gravity is lower than 1. According to the present invention the hydrophobic liquid 12 is a silicone oil. In an embodiment not being an embodiment of the present invention, the hydrophobic liquid is a liquid paraffin.

Meanwhile, the hydrophobic liquid 12 is in the form of liquid at room temperatures (20 to 25°C) and is phase separated from water. The viscosity is not restricted as long as it can be stirred at an ordinary temperature, but a lower viscosity is more preferred. The average molecular weight of the hydrophobic liquid 12 is not limited as long as it satisfies the aforementioned condition, and it is preferably, for example, from 200 to 1000.

The plating process temperature is preferably from 20 to 80°C in view of the workability, and more preferably from 25 to 60°C. As the condition of current application, it is preferred that the process is conducted under a direct current or a pulse current having a current density of 0.01 to 10 A/dm². In such a condition, a uniform plating film can be formed in a high current efficiency. An excessively high current density results in degradation of the compounds, formation of non-uniform plating film or deterioration of the current efficiency, and therefore it is not preferable. The current efficiency is preferably 30% or higher, and more preferably 80% or higher from the viewpoint of production efficiency.

### EXAMPLES

The present invention will be described in more detail below with reference to specific examples. It is noted that the following examples are to show specific examples of contents of the invention, and the invention is not to be limited to these examples. As mentioned before, in the present invention, various changes and modifications can be made by a person skilled in the art within the scope of the appended claims.

### Preparation and Evaluation of Example 1

Figure 2 is a schematic drawing showing a perspective view of an example of a heat resistant member (turbine blade) according to the present invention. A turbine blade 20 shown in Fig. 2 is a heat resistant member used as, for example, a rotor blade in a first stage of a gas turbine including three stages of rotor blades. The turbine blade 20 includes a blade portion 21, a platform portion 22, a shank portion 23, seal fins 24, and a dovetail 25, and is mounted to a rotor disk (not shown) via the dovetail 25. The blade portion 21 is provided with a tip pocket 26 at a tip portion thereof. Meanwhile, in the rotor blade, there is provided a cooling hole (not shown) which allows a coolant (for example, air or water steam) to pass through and cool the rotor blade from inside so as to penetrate from the dovetail to the blade portion.

As an example of the size of the turbine blade 20, the length from the platform portion 22 to the tip of the blade portion 21 is 100 mm, and the length from the platform portion 22 to the tip of the dovetail 25 is 120 mm. As the substrate constituting the turbine blade 20, for example, a Ni based superalloy (Rene' 80: Ni-14 mass% Cr-4 mass% Mo-4 mass% W-3 mass% Al-5 mass% Ti-9.5 mass% Co) can be used.

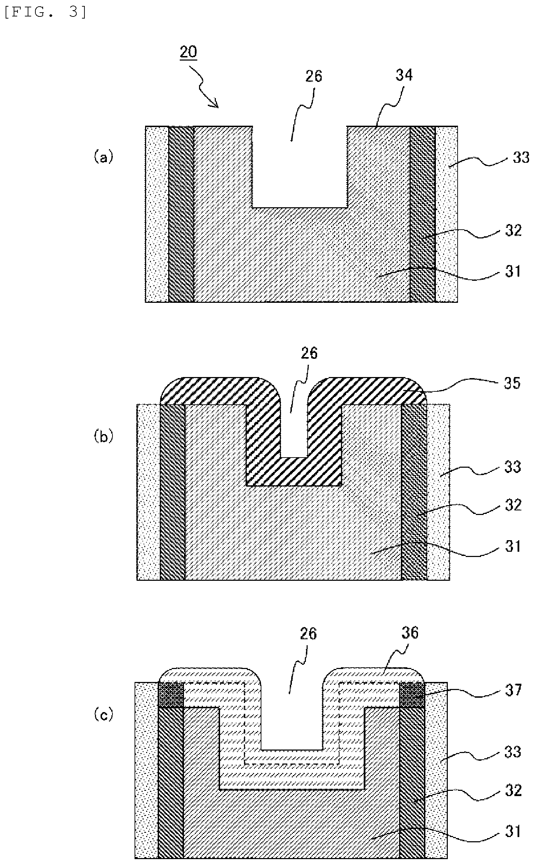

Figures 3(a) to 3(c) are schematic drawings showing cross sectional views of Fig. 2 viewed from the arrow A-A direction in Fig. 2, and show exemplary steps in a formation of a thermal barrier coating on a superalloy substrate. With reference to Figs. 3(a) to 3(c), an example of the procedure of forming a thermal barrier coating on a superalloy substrate will be explained.

Firstly, a superalloy substrate for a turbine blade 20 as shown in Fig. 2 was prepared. In the turbine blade 20, a heat resistant alloy layer 32 (thickness: about 100 µm) was formed on a superalloy substrate 31 of the blade portion 21 and the platform portion 22 which were to be subjected to high temperature combustion gas in the turbine blade 20 (see Fig. 3 (a)). The formation of the heat resistant alloy layer 32 was carried out, using a CoNiCrAlY alloy powder (Co-32 mass% Ni-21 mass% Cr-8 mass% Al-0.5 mass% Y), by a vacuum plasma spraying method (VPS).

Next, the superalloy substrate 31 coated with the heat resistant alloy layer 32 was subjected to a heat treatment of holding at 1121°C for 4 hours in vacuum to form a diffusion bonding between the heat resistant alloy layer 32 and the superalloy substrate 31, and followed by a solution heat treatment to the superalloy substrate 31. Subsequently, the resultant was subjected to a heat treatment at 843°C for 24 hours in vacuum to effect an aging treatment on the superalloy substrate 31. The atmosphere of the heat treatments is not limited to vacuum, and any atmosphere can be used as long as it is chemically inert to the heat resistant alloy layer 32 and the superalloy substrate 31.

Then, on the surface of the heat resistant alloy layer 32 formed on the blade portion 21 and the platform portion 22, a ceramic thermal barrier layer 33 (thickness: about 300 µm) was formed (see Fig. 3(a)). The formation of the ceramic thermal barrier layer 33 was carried out, using an 8 mass% yttria partially-stabilized zirconia powder, by an atmospheric plasma spraying method (APS).

Next, to form aluminide coating on a tip portion of the blade portion 21, the tip portion of the blade portion 21 including a tip pocket 26 was electroplated with a metal aluminum film. Here, the tip portion of the blade portion 21 is possibly somewhat contaminated by the previous steps of forming the heat resistant alloy layer 32, of diffusion bonding and solution heat treatment, of the aging heat treatment, and of forming the ceramic thermal barrier layer 33. Accordingly, prior to the step of the electroplating with a metal aluminum, there is preferably conducted a step of cleaning the area to be plated (i.e., the area where the aluminide coating is formed in a later step) to expose a base metal of the superalloy substrate 31.

A step of exposing a base metal of the superalloy substrate 31 is not particularly limited, but a conventional method can be utilized. In this embodiment, it was conducted by washing with high pressure water, followed by washing with an acid and with pure water. With this procedure, a clean base metal-exposed portion 34 was obtained (see Fig. 3(a)).

The electroplating with a metal aluminum was performed by the non-aqueous electroplating method described before (see Fig. 1) . Aluminum chloride anhydride (Wako Pure Chemical Industries, Ltd., AlCl₃) was used as a metal halide, 1-ethyl-3 -methylimidazolium chloride (KANTO CHEMICAL CO., INC., [EMIM] Cl) was used as an organic compound, and these compounds were mixed so as to give a molar ratio of " [EMIM] Cl:AlCl₃ = 1:2", whereby a non-aqueous plating liquid 11 was obtained. Further, as a hydrophobic liquid 12, a liquid paraffin (KANTO CHEMICAL CO., INC.) was provided.

The non-aqueous plating liquid 11 prepared was put in a plating tank 13 made of polypropylene, a hydrophobic liquid 12 was poured from above, whereby the non-aqueous plating liquid 11 was liquid-encapsulated with the hydrophobic liquid 12. Meanwhile, the preparation and the liquid-encapsulating of the non-aqueous plating liquid were carried out in a glove box under argon atmosphere (temperature: 25°C, relative humidity: 5%).

Subsequently, the glove box was opened to the air atmosphere by opening a top cover, and an assembly as shown in Fig. 1 was fabricated. The superalloy substrate 31 having the heat resistant alloy layer 32 and the ceramic thermal barrier layer 33 formed thereon was used as a cathode electrode, and an aluminum plate (purity: 99.9%) was used as an anode electrode. The two electrodes were immersed in the non-aqueous plating liquid 11 so as to face to each other with a 30 mm distance in the plating tank 13. The superalloy substrate 31 was connected to the power source 17 with the dovetail 25, and the base metal-exposed portion 34 was immersed in the non-aqueous plating liquid 11.

Under a plating condition of "a current density of -10 A/dm², a plating time of 100 minutes, a plating voltage of 3 V or lower, a plating liquid temperature of 25°C" with a constant-current power supply, an electroplating was conducted. Here, on the setting of the current density, a surface area of the base metal-exposed portion 34 was measured in advance.

A microstructure observation and a composition analysis were performed on the obtained sample using a scanning electron microscope energy dispersive x-ray spectrometer (SEM-EDX). As a result, it was confirmed that a metal aluminum film 35 was formed on the base metal-exposed portion 34 and on an edge surface of the heat resistant alloy layer 32, but not formed on the electrically insulating ceramic thermal barrier layer 33 (see Fig. 3(b)). Thicknesses of the metal aluminum film 35 were measured at two points of the upper surface of the tip pocket 26, two points of the inside surface of the tip pocket 26, and one point of the bottom surface of the tip pocket 26, and then, it was confirmed that a plating film having an even thickness of 20 ± 1 µm and not containing a void was obtained. In addition, the deposited aluminum film 35 had a uniform crystalline structure due to simultaneous growth from the base metal-exposed portion 34 brought out by the electroplating. It is also confirmed that a purity of the metal aluminum film 35 was 99.5% by mass.

With the above results, it was demonstrated that the non-aqueous electroplating of the present invention makes it possible to form a good metal aluminum film even under an air atmospheric condition, and to form the metal aluminum film on a selective area of a heat resistant superalloy substrate.

Incidentally, in this embodiment, because the ceramic thermal barrier layer 33 plays a role of a mask, the metal aluminum film can be formed on a selective area without a special mask. The present invention, however, does not limit the use of a mask, and an appropriate mask may be used as necessary. Furthermore, the non-aqueous electroplating of the present invention has an advantage in that a conventional inexpensive mask can be used in the cases of using a mask, because the plating temperature is sufficiently low (20 to 80°C) and no corrosive gas is generated.

A preferred thickness (average thickness) of the metal aluminum film 35 formed is within a range from 10 to 100 µm. When the thickness of the metal aluminum film 35 is lower than 10 µm, because the amount of aluminum is short, the thickness of the aluminide coating produced in a later step and the concentration of aluminum may be insufficient. On the other hand, when the thickness is thicker than 100 µm, the amount of aluminum is so large that the aluminide coating produced in the later step may be brittle.

Next, the superalloy substrate 31 having the metal aluminum film 35 formed thereon was subjected to a heat treatment at 1121°C for 4 hours in vacuum to make a diffusion reaction between the metal aluminum film 35 and the superalloy substrate 31, whereby an aluminide coating 36 was formed (see Fig. 3 (c)) . Furthermore, on the edge portion of the heat resistant alloy layer 32, an aluminum high concentration area 37 where the aluminum component was added to the original heat resistant alloy was formed.

The heat treatment for forming the aluminide coating 36 is not particularly limited as long as a temperature and a time sufficient for the aluminum component of the plating film (metal aluminum film 35) to diffuse and penetrate the superalloy substrate 31 are secured, and for example, the superalloy substrate 31 is preferably heat treated at a temperature within a range of 900 to 1200°C for 1 to 10 hours. As for the atmosphere during the heat treatment, vacuum is preferred from the viewpoints of preventing oxidation of aluminum and of preventing retention of aluminum vapor generated (preventing vapor deposition of aluminum on an undesired area). However, the atmosphere is not limited to vacuum, and any atmosphere may be used as long as it is chemically inert to the object of the heat treatment.

Meanwhile, in this embodiment, although the diffusion bonding and solution heat treatment, the aging heat treatment, and the aluminide forming heat treatment were separately carried out from one another as described above, the diffusion bonding and solution heat treatment may be combined with the aluminide forming heat treatment, or the aging heat treatment may be combined with the aluminide forming heat treatment. Such a combination makes it possible to simplify and shorten (namely, reduce cost of) the entire process.

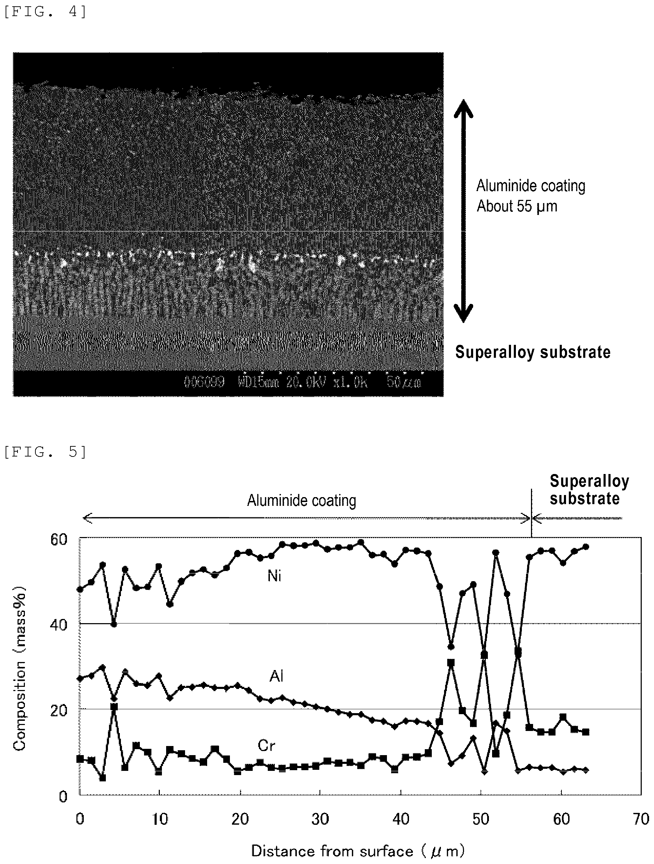

A microstructure observation and a composition analysis were performed on the sample subjected to the aluminide forming heat treatment using an SEM-EDX. Figure 4 shows an example of an SEM observation image of a vertical cross section of an aluminide coating. As shown in Fig. 4, the aluminide coating had a thickness of about 55 µm and had a three-layered structure. A column-shaped structure comprising a β-NiAl phase and a y-Ni phase was formed in a layer on the substrate side, an intermediate layer comprised substantially a layer of a β-NiAl single phase, and a surface layer had a structure where a deposition phase rich in Cr and a β-NiAl phase were present in mixture. Because of the fact that the metal aluminum film before the formation of the aluminide coating had a uniform crystalline structure without a void, a three-layered structure without any structural disorder (that is, stable) was formed. When such a three-layered structure is formed, since an aluminum oxide (Al₂O₃) layer of highly oxidation resistant is continuously produced on the uppermost surface under an operation environment of a high temperature. Consequently, oxidation of a main component of the superalloy substrate (Ni, in this embodiment) is suppressed, and oxidative worn-out of the superalloy substrate can be decreased even under a severe operation environment.

Figure 5 shows an example of results of a composition analysis of an aluminide coating along a depth direction with an EDX. As shown in Fig. 5, the aluminum component was diffused from the surface side toward the substrate side, and the aluminum concentrations were about 28% by mass on the surface side and about 12% by mass on the substrate side. In contrast, the nickel component and the chromium component were diffused from the substrate side toward the surface side, and the nickel concentrations were about 55% by mass on the substrate side and about 48% by mass on the surface side, and the chromium concentrations were about 14% by mass on the substrate side and about 9% by mass on the surface side.

The aluminum concentration in the aluminide coating is preferably from 10% by mass to 40% by mass. When the aluminum concentration is less than 10% by mass, the amount of aluminum is too short to continuously produce the Al₂O₃ layer on the uppermost layer. In contrast, when the aluminum concentration is more than 40% by mass, the amount of aluminum is so large that the aluminide coating becomes brittle.

Incidentally, in the aluminum high concentration area 37 formed in an edge portion of the heat resistant alloy layer 32, the aluminum concentration was about 35% by mass. The aluminum high concentration area 37 has an advantage of enhancing the oxidation suppression effect in the edge portion of the heat resistant alloy layer 32, thereby suppressing progress of a crack due to oxidative degradation.

Furthermore, in order to stabilize the Al₂O₃ layer formed on the uppermost surface of the aluminide coating to further enhance the oxidation resistance and corrosion resistance, it is preferred to add a noble metal element (for example, platinum) to the aluminide coating. For realizing that, as an aluminum plating film formed on the base metal-exposed portion 34, there is preferably formed an aluminum alloy film having a noble metal element added thereto.

A turbine blade 20 produced by applying a thermal barrier coating as described above was incorporated in a gas turbine and the gas turbine was operated, whereby the oxidation resistance was investigated. As a result, oxidative worn-out was hardly recognized in the tip portion (including a tip pocket 26) of the blade portion 21 having the aluminide coating formed thereon. It was thus confirmed that a good oxidation resistance was exhibited. For comparison, when the same investigation was conducted using a turbine blade having a blade portion 21 in which no aluminide coating was formed on the tip portion, an apparent oxidative worn-out was observed on the tip portion of the blade portion 21.

From the above results, it is demonstrated that the method for forming an aluminide coating according to the present invention makes it possible to, in the electroplating process, apply an electroplating of aluminum under an atmospheric condition (in an atmosphere opened to the air) in a safe, high efficient and sound manner. Therefore, a favorable aluminide coating can be formed in a selective area more easily with a better workability (that is, with a lower cost) than that in the related art.

### Preparation and Evaluation of Example 2

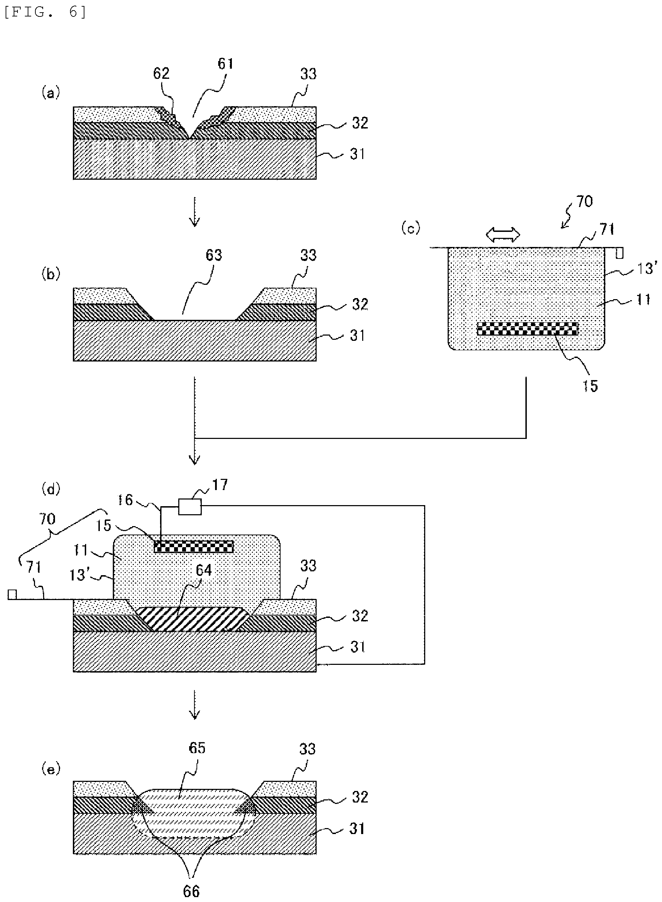

Hereinafter, a partial repair of a thermal barrier coating layer will be explained with reference to Fig. 6. Figures 6 (a) to 6(e) are schematic drawings showing cross sectional views of exemplary steps in a partial repair of a thermal barrier coating layer formed on a superalloy substrate.

A gas turbine was operated for a predetermined period of time using the turbine blade 20 produced in Example 1 above, and thereafter, the blade portion 21 of the turbine blade 20 was inspected. As a result, a damage portion 61 due to corrosion or oxidative erosion was confirmed on the surface (thermal barrier coating layer) of the blade portion 21 (see Fig. 6(a)).

Firstly, a step was performed in which corrosion products/oxidation products 62 and a degraded thermal barrier coating layer (a heat resistant alloy layer 32 and a ceramic thermal barrier layer 33) were removed in the damaged portion 61 of the thermal barrier coating layer to expose a base metal of a superalloy substrate 31. Specifically, the damaged portion was washed and removed with high pressure water, and then washed with an acid and with pure water, whereby a clean base metal-exposed portion 63 was obtained (see Fig. 6 (b)).

A plating bath for topical plating (a topical plating bath) 70 as shown in Fig. 6 (c) was prepared. The topical plating bath 70 is provided with a plating tank 13' which includes a top cover 71 capable of being slidably opened and closed and which is filled with a non-aqueous plating liquid 11. And, a counter electrode 15 is fixed inside the plating tank 13'. Air tightness is maintained between the plating tank 13' and the top cover 71. The topical plating bath 70 is preferably prepared in an inert atmosphere (for example, in nitrogen, or in argon) which does not degrade the non-aqueous plating liquid 11 by means of a glove box or the like. By this, the non-aqueous plating liquid 11 is not degraded even when bubbles remain in the plating tank 13' .

In this embodiment, aluminum chloride anhydride (Wako Pure Chemical Industries, Ltd., AlCl₃) was used as a metal halide, butylpyridinium chloride (KANTO CHEMICAL CO., INC., [BP] Cl) was used as an organic compound, and the two compounds were mixed to give a molar ratio of "[BP]Cl:AlCl₃ = 1:1.5", whereby the non-aqueous plating liquid 11 was prepared.

Next, the topical plating bath 70 with the top cover 71 closed was placed over the selective area (here, the clean base metal-exposed portion 63) to be plated such that the top cover 71 faced the selective area, and the top cover 71 was opened to bring the non-aqueous plating liquid 11 into contact with the base metal-exposed portion 63. Then, the superalloy substrate 31 (a portion in which the thermal barrier coating was not provided) and the counter electrode 15 were connected to a power supply 17 via lead wires 16 to carry out an electroplating, whereby a metal aluminum film 64 was formed on the base metal-exposed portion 63 (see Fig. 6(d)). The plating conditions were "a current density of -20 A/dm², a plating time of 50 minutes, a plating voltage of 3 V or lower, and a plating liquid temperature of 25°C".

Thicknesses of the metal aluminum film 64 obtained by the plating were measured, and it was confirmed that an even plating film having a thickness of about 20 µm was obtained. Due to the fact that the other portion than the base metal-exposed portion 63 was covered with the ceramic thermal barrier layer 33, the metal aluminum film was not formed in an area other than the desired area. It was confirmed that, in the method for forming a metal aluminum film according to this embodiment, even when the object to be plated itself was in a space opened to the air atmosphere, because the electroplating was conducted by using the plating bath 70 for topical plating, the non-aqueous plating liquid 11 could be shielded from the air atmosphere, making it possible to form the metal aluminum film 64 in the selective area in a safe, high effective, and sound manner.

Next, the superalloy substrate 31 having the metal aluminum film 64 formed thereon was subjected to the same diffusion heat treatment as in Example 1 to form an aluminide coating 65 (see Fig. 6(e)). In addition, an aluminum high concentration area 66 where the aluminum component was added to the original heat resistant alloy was formed on an edge portion of the heat resistant alloy layer 32.

A turbine blade 20 in which the thermal barrier coating layer was partially repaired as described above was incorporated in a gas turbine and the gas turbine was operated, whereby the oxidation resistance was invenstigated. As a result, oxidative worn-out was hardly recognized in the portion partially repaired by the formation of the aluminide coating 65, and it was confirmed that a good oxidation resistance was exhibited.

### Preparation and Evaluation of Example 3

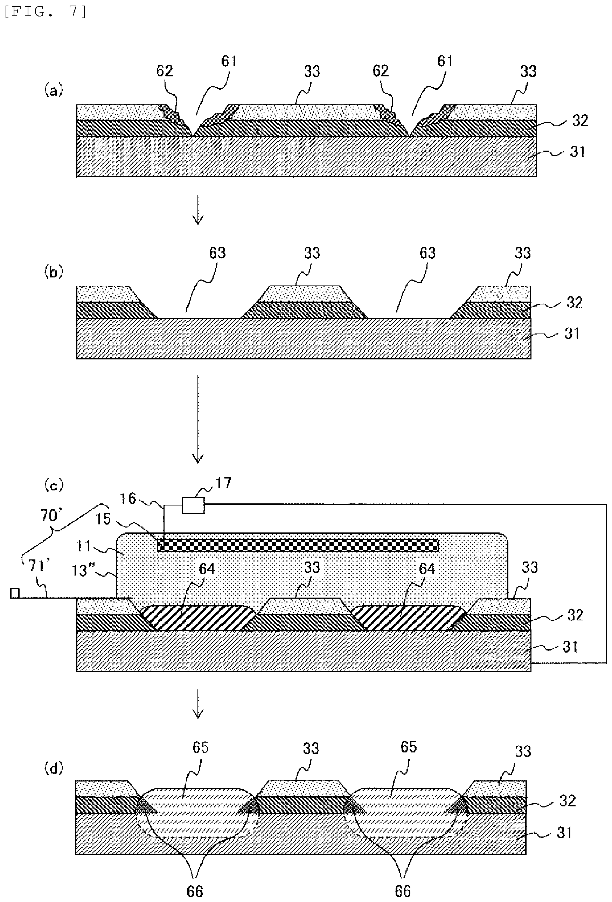

In Example 3, a simultaneous partial repair of plural portions of a thermal barrier coating layer was conducted by a method as shown in Fig. 7 with the same non-aqueous plating liquid as in Example 2. Figures 7(a) to 7(d) are schematic drawings showing cross sectional views of other exemplary steps in a partial repair of a thermal barrier coating layer formed on a superalloy substrate. Firstly, a step of exposing a base metal of the substrate was carried out for the plural damaged portions 61 in the same manner as in Example 2 to obtain clean base metal-exposed portions 63 (see Figs. 7(a) and 7(b)).

A topical plating bath 70' (provided with a plating tank 13" which included a top cover 71' capable of being slidably opened and closed and which was filled with a non-aqueous plating liquid 11, and a counter electrode 15 fixed inside the plating tank 13") was prepared. Then, in the same manner as in Example 2, the topical plating bath 70' was placed such that the plural base metal-exposed portions were immersed in the non-aqueous plating liquid 11, and an electrical field was applied between the counter electrode 15 and the superalloy substrate 31 to conduct an electroplating simultaneously to the plural base metal-exposed portions, whereby metal aluminum films 64 were formed (see Fig. 7(c)). In Fig. 7(c), a single counter electrode 15 was shown, but the counter electrode 15 may be composed of plural counter electrodes in which the current paths are disposed in parallel.

By applying the electroplating in such a manner, no metal aluminum film was deposited on the top surface of the ceramic thermal barrier layer 33 even without a step of masking or the like, and the metal aluminum films 64 could be formed selectively and simultaneously on only the base metal-exposed portions which were desired to be plated. In addition, because the metal aluminum films 64 deposited were simultaneously grown from the plural base metal-exposed portions 34, the obtained films had an even film thickness and a uniform crystalline structure. From this result, it was confirmed that the non-aqueous electroplating method of the present invention made it possible to form a metal aluminum film also on plural selective areas simultaneously and easily. This is important in enabling formation of uniform repairing aluminide coatings (formed by a diffusion heat treatment in a subsequent step) on plural portions to be repaired.

### Preparation and Evaluation of Examples 4 and 5 which are not part of the claimed invention

On a turbine blade 20 having plural damaged portions recognized on a surface of the same blade portion 21 as in the Example 2, a step of exposing a base metal of a superalloy substrate 31 at the damaged portions 61 was carried out, and then partial repairing of a thermal barrier coating layer was conducted using a non-aqueous plating liquid different from that in Examples 1 to 3.

In Example 4, aluminum chloride anhydride (Wako Pure Chemical Industries, Ltd., AlCl₃) was used as a metal halide, tetrabutylammonium chloride (KANTO CHEMICAL CO., INC., [TBA]Cl) was used as an organic compound, and the compounds were mixed to give a molar ratio of "[TBA]Cl:AlCl₃ = 1:1.5", whereby the non-aqueous plating liquid was prepared. As a hydrophobic liquid, a silicone oil (Shin-Etsu Chemical Co., Ltd., KF-96L-1cs) was used.

In Example 5, aluminum chloride anhydride (Wako Pure Chemical Industries, Ltd., AlCl₃) was used as a metal halide, methyltributylphosphonium chloride (Nippon Chemical Industrial Co., Ltd., [MTBP]Cl) was used as an organic compound, and the compounds were mixed to give a molar ratio of "[MTBP]Cl:AlCl₃ = 1:1.5", whereby the non-aqueous plating liquid was prepared. As a hydrophobic liquid, the same silicone oil as in Example 4 was used.

In both of Examples 4 and 5, the other forming conditions were the same as in Example 1. Measurement of the thicknesses of the plated metal aluminum film 64 revealed that a plating film having an even film thickness of 10 ± 0.5 µm was obtained both in Examples 4 and 5. From the results, it was confirmed that the non-aqueous electroplating method of the present invention made it possible to form a metal aluminum film even on plural selective areas simultaneously and easily.

Next, the same diffusion heat treatment as in Example 1 was applied and thereafter, the turbine blade 20 partially repaired was incorporated in a gas turbine and the gas turbine was operated, whereby the oxidation resistance was investigated. As a result, oxidative worn-out was hardly recognized in the portions partially repaired by the formation of the aluminide coating 65, and it was confirmed that a good oxidation resistance was exhibited.

Preparation and Evaluation of Examples 6, 7, and 8 which are not part of the claimed invention

In these examples, cases with superalloy substrates different from that in Example 1 were studied. A Co based superalloy (INCONEL 783: 28.5 mass% Ni-34 mass% Co-26 mass% Fe-3 mass% Cr-5.4 mass% Al-3 mass% Nb-0.1 mass% Ti) was used for Example 6, an Fe based superalloy (INCOLOY A-286: 54 mass% Fe-25 . 5 mass% Ni-15 mass% Cr-1. 3 mass% Mo-2 . 15 mass% Ti-0. 3 mass% V) for Example 7, and an Nb based superalloy (74 at. % Nb-24 at. % Al-4 at.% Mo) for Example 8. Turbine blades 20 were produced in the same manner as in Example 1 except for the above conditions.

The turbine blade 20 produced was incorporated in a gas turbine and the gas turbine was operated, whereby the oxidation resistance was investigated in each example. As a result, oxidative worn-out was hardly recognized in the tip portion (including a tip pocket 26) of the blade portion 21 having the aluminide coating formed thereon, and it was confirmed that a good oxidation resistance was exhibited, as was in Example 1. From these results, it was demonstrated that the method for forming an aluminide coating according to the present invention could be applied to various kinds of superalloy substrates and a favorable aluminide coating could be formed in a selective area more easily with a better workability (that is, with a lower cost) than that in the related art.

The above descriptions were made with examples of a turbine blade of a gas turbine, but the heat resistant member according to the present invention is not limited thereto and may be applicable to heat resistant members such as, for example, a steam turbine, a jet engine, a turbo charger, etc.

Furthermore, in recent years, optimization in shape of the heat resistant members has been considered for the purpose of enhancement of the efficiency of the turbine. And, thermal barrier coatings on the heat resistant members with more complicated shapes have been demanded than ever before. In the method for forming an aluminide coating according to the present invention, an electroplating with a metal aluminum or an aluminum based alloy can be applied even under an air atmospheric condition (in an atmosphere opened to the air) in a safe, high efficient and sound manner. Therefore, an aluminide coating can be easily and securely formed even on superalloy substrates with more complicated shapes than ever before.

Incidentally, Examples above are specifically described to help understanding of the present invention, and the present invention is not limited to the case including the entire configurations described here. For example, a part of the configurations of one example may be replaced with a configuration of another example, or a configuration of an example may be added to a configuration of another example. Further, in a part of each example, a deletion, a substitution by another configuration, or an addition of another configuration may be made.

### LEGEND

11 ... Non-aqueous plating liquid; 12 ... Hydrophobic liquid; 13, 13', 13" ... Plating tank; 14 ... Object to be plated; 15 ... Counter electrode; 16 ... Lead wire; 17 ... Power supply; 20 ... Turbine blade; 21 ... Blade portion; 22 ... Platform portion; 23 ... Shank portion; 24 ... Seal fin; 25 ... Dovetail; 26 ... Tip pocket; 31 ... Superalloy base material; 32 ... Heat resistant alloy layer; 33 ... Ceramic thermal barrier layer; 34 ... Base material-exposed portion; 35 ... Metallic aluminum coating; 36 ... Aluminide coating; 37 ... Aluminum high concentration area; 61 ... Damaged portion; 62 ... Corrosion products/oxidation products; 63 ... Base material-exposed portion; 64 ... Metallic aluminum coating; 65 ... Aluminide coating; 66 ... Aluminum high concentration area; 70, 70' ... Topical plating bath; and 71, 71' ... Top cover.

## Claims

1. A method for repairing a heat resistant superalloy member (14, 20), by forming an aluminide coating on a surface of the heat resistant superalloy substrate (31), comprising the steps of:
exposing a base metal of the heat resistant alloy substrate in a selective area (26, 34) where the aluminide coating is to be formed;
wherein an area except for the selective area of the heat resistant superalloy substrate (26, 34) has a ceramic thermal barrier coating layer (33) formed thereon,
forming a film of metallic aluminum or an aluminum based alloy film (35) on the exposed base metal, by a non-aqueous electroplating; and
conducting a heat treatment to the heat resistant alloy substrate on which the film is formed, in order to make a diffusion reaction between an aluminum component in the film and the base metal, thereby forming the aluminide coating,
wherein there is used, as a plating liquid (11), a non-aqueous plating liquid containing a halide of the metal to be plated (a metal halide), where the metal halide comprises an aluminum halide and optionally also halides of metals other than aluminum which have a negative standard electrode potential, and an organic compound which forms an ion pair with the metal halide,
wherein the non-aqueous electroplating is carried out by immersing topically the selective area into the non-aqueous plating liquid,
**characterized in that** the top surface of the non-aqueous plating liquid is liquid-encapsulated with a hydrophobic liquid (12) consisting of a silicone oil, the hydrophobic liquid being a liquid which phase-separates from the non-aqueous plating liquid and has a smaller specific gravity than the non-aqueous plating liquid, for shielding the non-aqueous plating liquid from the atmosphere.

2. The method for repairing a heat resistant superalloy member (14, 20) according to claim 1, wherein the exposed base metal of the selective area (26, 34) is immersed into the non-aqueous plating liquid (11) by passing through a layer of the hydrophobic liquid (12) liquid-encapsulating the non-aqueous plating liquid (11), is subjected to the electroplating, and thereafter is got out of the non-aqueous plating liquid (11) through the layer of the hydrophobic liquid (12).

3. The method for repairing a heat resistant superalloy member (14, 20) according to any one of claims 1 or 2, wherein the organic compound consists of at least one of a dialkylimidazolium salt, a pyridinium salt, an aliphatic phosphonium salt, and a quarternary ammonium salt.

4. The method for repairing a heat resistant superalloy member (14, 20) according to any one of claims 1 to 3, wherein the non-aqueous plating liquid (11) has a molar concentration of the metal halide of 1 to 3 times a molar concentration of the organic compound.

5. The method for repairing a heat resistant superalloy member (14, 20) according to any one of claims 1 to 4, wherein the heat resistant superalloy substrate (31) is made of a nickel based superalloy, a cobalt based superalloy, an iron based superalloy, or a niobium based superalloy.

6. The method for repairing a heat resistant superalloy member (14, 20) according to any one of claims 1 to 5, wherein the heat resistant superalloy substrate (31) is a substrate suitable for a high temperature member of a gas turbine.

7. The method for repairing a heat resistant superalloy member (14, 20) according to any one of claims 1 to 6, wherein the step of exposing the base metal is a step of cleaning the selective area (26, 34).

8. The method for repairing a heat resistant superalloy member (14, 20) according to any one of claims 1 to 6, wherein the step of exposing the base metal is a step of removing a coating layer formed on a surface of the heat resistant superalloy substrate (31).

## Patentansprüche

1. Verfahren zum Reparieren eines wärmebeständigen Superlegierungselementes (14, 20) durch Bilden einer Aluminidbeschichtung auf einer Fläche des wärmebeständigen Superlegierungssubstrates (31), das die folgenden Schritte umfasst:
Freilegen eines Basismetalls des wärmebeständigen Legierungssubstrates in einem ausgewählten Bereich (26, 34), in dem die Aluminidbeschichtung gebildet werden soll;
wobei ein Bereich, der nicht der ausgewählte Bereich des wärmebeständigen Superlegierungssubstrates (26, 34) ist, eine keramische Wärmesperrschicht (33) hat, die darauf gebildet ist,
Bilden eines Films aus metallischem Aluminium oder eines Legierungsfilms auf Aluminiumbasis (35) auf dem freigelegten Basismetall durch ein nicht-wässriges Elektroplattieren und Ausführen einer Wärmebehandlung für das wärmebeständige Legierungssubstrat, auf dem der Film gebildet ist, um eine Diffusionsreaktion zwischen einer Aluminiumkomponente im Film und dem Basismetall zu erzeugen, wodurch die Aluminidbeschichtung gebildet wird,
wobei als Galvanisierflüssigkeit (11) eine nicht-wässrige Galvanisierflüssigkeit verwendet wird, die ein Halogenid des Metalls enthält, welches galvanisiert werden soll (ein Metallhalogenid), wobei das Metallhalogenid ein Aluminiumhalogenid und optional auch Halogenide von anderen Metallen als Aluminium umfasst, die ein negatives Standard-Elektrodenpotenzial haben, und eine organische Verbindung, die ein Ionenpaar mit dem Metallhalogenid bildet, wobei das nicht-wässrige Galvanisieren durch topisches Eintauchen des ausgewählten Bereichs in die nicht-wässrige Galvanisierflüssigkeit ausgeführt wird,
**dadurch gekennzeichnet, dass** die obere Fläche der nicht-wässrigen Galvanisierflüssigkeit mit einer hydrophoben Flüssigkeit (12) flüssigkeitsverkapselt ist, die aus einem Silikonöl besteht, wobei die hydrophobe Flüssigkeit eine Flüssigkeit ist, die von der nicht-wässrigen Galvanisierflüssigkeit phasengetrennt ist und ein geringeres spezifisches Gewicht als die nicht-wässrige Galvanisierflüssigkeit hat, zum Abschirmen der nicht-wässrigen Galvanisierflüssigkeit gegenüber der Atmosphäre.

2. Verfahren zum Reparieren eines wärmebeständigen Superlegierungselementes (14, 20) nach Anspruch 1, wobei das freigelegte Basismetall des ausgewählten Bereichs (26, 34) in die nicht-wässrige Galvanisierflüssigkeit (11) durch Führen durch eine Schicht der hydrophoben Flüssigkeit (12), die die nicht-wässrige Galvanisierflüssigkeit (11) flüssigkeitsverkapselt, eingetaucht wird und dem Galvanisieren unterworfen wird und danach aus der nicht-wässrigen Galvanisierflüssigkeit (11) durch die Schicht der hydrophoben Flüssigkeit (12) hindurch herausgenommen wird.

3. Verfahren zum Reparieren eines wärmebeständigen Superlegierungselementes (14, 20) nach einem der Ansprüche 1 oder 2, wobei die organische Verbindung aus mindestens einer Verbindung aus einem Dialkylimidazoliumsalz, einem Pyridiniumsalz, einem aliphatischen Phosphoniumsalz und einem quaternären Ammoniumsalz besteht.

4. Verfahren zum Reparieren eines wärmebeständigen Superlegierungselementes (14, 20) nach einem der Ansprüche 1 bis 3, wobei die nicht-wässrige Galvanisierflüssigkeit (11) eine molare Konzentration des Metallhalogenids vom 1 - 3fachen einer molaren Konzentration der organischen Verbindung hat.

5. Verfahren zum Reparieren eines wärmebeständigen Superlegierungselementes (14, 20) nach einem der Ansprüche 1 bis 4, wobei das wärmebeständige Superlegierungssubstrat (31) aus einer nickelbasierten Superlegierung, einer kobaltbasierten Superlegierung, einer eisenbasierten Superlegierung oder einer niobbasierten Superlegierung hergestellt ist.

6. Verfahren zum Reparieren eines wärmebeständigen Superlegierungselementes (14, 20) nach einem der Ansprüche 1 bis 5, wobei das wärmebeständige Superlegierungssubstrat (31) ein Substrat ist, das sich als Hochtemperatur-Element einer Gasturbine eignet.

7. Verfahren zum Reparieren eines wärmebeständigen Superlegierungselementes (14, 20) nach einem der Ansprüche 1 bis 6, wobei der Schritt des Freilegens des Basismetalls ein Schritt des Reinigens des ausgewählten Bereichs (26, 34) ist.

8. Verfahren zum Reparieren eines wärmebeständigen Superlegierungselementes (14, 20) nach einem der Ansprüche 1 bis 6, wobei der Schritt des Freilegens des Basismetalls ein Schritt des Entfernens einer Überzugsschicht ist, die auf einer Oberfläche des wärmebeständigen Superlegierungssubstrats (31) gebildet ist.

## Revendications

1. Procédé pour la réparation d'un élément en superalliage résistant à la chaleur (14, 20) en formant un revêtement d'aluminure sur une surface du substrat en superalliage résistant à la chaleur (31), comprenant les étapes suivantes :
exposition d'un métal de base dans une zone sélective (26, 34) où le revêtement d'aluminure est censé être formé ;
où une zone, à l'exception de la zone sélective du substrat en superalliage résistant à la chaleur (26, 34) comporte une couche de revêtement barrière en céramique (33) formée sur celle-ci,
formation d'un film en aluminium métallique ou d'un film en alliage à base d'aluminium (35) sur le métal de base exposé, par dépôt électrolytique non-aqueux ; et
soumission du substrat en superalliage résistant à la chaleur sur lequel le film est formé à un traitement thermique, afin de produire une réaction de diffusion entre un composant d'aluminium dans le film et le métal de base, formant ainsi le revêtement d'aluminure,
dans lequel un liquide de dépôt non-aqueux contenant un halogénure du métal à déposer (un halogénure métallique) est utilisé comme liquide de dépôt (11), où l'halogénure métallique comprend un halogénure d'aluminium et facultativement également des halogénures de métaux autres que l'aluminium présentant un potentiel d'électrode standard négatif, et un composé organique formant une paire d'ions avec l'halogénure métallique,
dans lequel le dépôt électrolytique non-aqueux est réalisé par immersion topique de la zone sélective dans le liquide de dépôt non-aqueux,
**caractérisé en ce que** la surface supérieure du liquide de dépôt non-aqueux est encapsulée dans un liquide hydrophobe (12) consistant en une huile de silicone, le liquide hydrophobe étant un liquide se séparant en phase d'avec le liquide de dépôt non-aqueux et présentant une gravité spécifique plus petite que le liquide de dépôt non-aqueux, pour isoler le liquide de dépôt non-aqueux par rapport à l'atmosphère.

2. Procédé pour la réparation d'un élément en superalliage résistant à la chaleur (14, 20) selon la revendication 1, dans lequel le métal de base exposé de la zone sélective (26, 34) est plongé dans le liquide de dépôt non-aqueux (11) en traversant une couche du liquide hydrophobe (12) encapsulant le liquide de dépôt non-aqueux (11), soumis au dépôt électrolytique, puis retiré du liquide de dépôt non-aqueux (11) à travers la couche du liquide hydrophobe (12).

3. Procédé pour la réparation d'un élément en superalliage résistant à la chaleur (14, 20) selon l'une quelconque des revendications 1 ou 2, dans lequel le composé organique consiste en l'un au moins parmi du sel de dialkylimidazolium, du sel de pyridinium, du sel de phosphonium aliphatique, et du sel d'ammonium quaternaire.

4. Procédé pour la réparation d'un élément en superalliage résistant à la chaleur (14, 20) selon l'une quelconque des revendications 1 à 3, dans lequel le liquide de dépôt non-aqueux (11) présente une concentration molaire de l'halogénure métallique de 1 à 3 fois une concentration molaire du composé organique.

5. Procédé pour la réparation d'un élément en superalliage résistant à la chaleur (14, 20) selon l'une quelconque des revendications 1 à 4, dans lequel le substrat en superalliage résistant à la chaleur (31) est constitué d'un superalliage à base de nickel, d'un superalliage à base de cobalt, d'un superalliage à base de fer ou d'un superalliage à base de niobium.

6. Procédé pour la réparation d'un élément en superalliage résistant à la chaleur (14, 20) selon l'une quelconque des revendications 1 à 5, dans lequel le substrat en superalliage résistant à la chaleur (31) est un substrat adapté pour un élément haute température d'une turbine à gaz.

7. Procédé pour la réparation d'un élément en superalliage résistant à la chaleur (14, 20) selon l'une quelconque des revendications 1 à 6, dans lequel l'étape d'exposition du métal de base est une étape de nettoyage de la zone sélective (26, 34).

8. Procédé pour la réparation d'un élément en superalliage résistant à la chaleur (14, 20) selon l'une quelconque des revendications 1 à 6, dans lequel l'étape d'exposition du métal de base est une étape d'élimination d'une couche de revêtement formée sur une surface du substrat en superalliage résistant à la chaleur (31).
